# DEMANDE DE BREVET EUROPEEN

(11) **EP 1 168 281 A1**
(43) Date de publication de la demande: **02.01.2002**
(21) Numéro de dépôt: 01401294.2
(22) Date de dépôt: 17.05.2001
(51) Int. Cl.: G09F 3/02, A01J 27/00

(54) **Support d'informations destiné à être apposé sur produit agro-alimentaire**

(30) Priorité: 22.06.2000 FR 0008190
(71) Demandeur: Plastohm S.A., 69656 Villefranche Sur Saone (FR)
(72) Inventeur: Vuillot, Roland, 01370 Saint Etienne du Bois (FR)
(74) Mandataire: Ballot, Paul Denis Jacques

(57) **Abrégé**

Support d'informations destiné à être apposé sur un produit agro-alimentaire, notamment un fromage, de manière à permettre son identification et sa tracabilité dans le temps, à partir de sa fabrication et jusqu'à sa consommation, caractérisé en ce qu'il est constitué d'une part d'une base (4) organiquement compatible avec le produit (2) pour produire avec celui-ci un phénomène d'adhésion naturelle, à la manière d'une greffe, et d'autre part d'une étiquette (5) réalisée en un matériau stable dimentionnellement, rapportée par tous moyens sur la base (4), sans liaison directe avec le produit (2) et comportant des informations de toutes formes reportées par quelques moyens que ce soit, directement ou indirectement.

## Description

La présente invention concerne un support d'informations destiné à être apposé sur un produit agro-alimentaire, de manière à permettre son identification et sa tracabilité dans le temps à partir de sa fabrication et ceci jusqu'à sa consommation.

Pour se faire, il est connu d'apposer des étiquettes ou analogue sur le produit, mais dans le cas d'un produit vivant, comme le fromage par exemple, cela présente bon nombre d'inconvénients.

En effet, ce type de produit dégage une humidité abondante, notamment au cours de son affinage, ce qui exclu les étiquettes en papier sur lesquelles seraient imprimées les informations.

En effet, une étiquette en papier se décollerait rapidement et les inscriptions seraient également rapidement illisibles.

On aurait pu penser à remplacer une étiquette en papier par une étiquette en matière plastique piquée dans le fromage, mais les essais ont démontré qu'il y avait rejet par le produit et noircissement de celui-ci autour du point d'ancrage, rendant le produit impropre à la consommation.

Une méthode bien connue consiste, pour remédier à ces inconvénients, d'introduire en cours de fabrication, une étiquette en caséine qui est une présure alimentaire dérivée du lait que l'on introduit dans le moule sur son bord périphérique interne, préalablement à la coulée du fromage à l'état pâteux dans le moule, étiquette en caséine sur laquelle on a reporté préalablement les informations souhaitées.

Les protéines contenues dans l'étiquette en caséine et les protéines du fromage produisent une adhésion naturelle à la manière d'une greffe, de ladite étiquette sur ledit fromage au cours de son affinage.

Une telle étiquette en caséine est connue et est en fait composée par un mélange de 70% de caséine, 10% d'eau, 10% de glycol et 10% d'éthanol pour l'obtention d'une pâte qui est mise sous presse et chauffée à 80° pendant quatre heures sous une forte pression afin d'obtenir des pains solides cylindriques que l'on déroule sous forme de feuilles sur une dérouleuse pour l'obtention de feuilles ayant l'épaisseur de 3 à 4 dixièmes de millimètres dans laquelle on découpe les étiquettes de tailles souhaitées.

Préférentiellement, ces feuilles sont préalablement perforées pour permettre l'égouttage de l'eau issu de pressage du fromage.

On imprime ensuite sur les étiquettes, des numéros de référence telle que des chiffres, lettres, logos etc.. ou encore des codes barres ou codes bidimentionnels.

Un tel procédé a déjà été décrit dans le brevet d'invention N°2 657 557 déposé par la demanderesse.

Néanmoins l'expérience montre que les variations dimensionnelles sont irrégulières dans le temps car il y a d'importantes reprises d'humidité et de transformations dues à la déformation du fromage au cours de l'affinage, ce qui rend rapidement les informations illisibles.

L'invention a pour but de remédier à ces inconvénients et concerne à cet effet, un support d'informations destiné à être apposé sur un produit agro-alimentaire, notamment un fromage, de manière à permettre son identification et sa tracabilité dans le temps, à partir de sa fabrication et jusqu'à sa consommation, caractérisé en ce qu'il est constitué d'une part d'une base organiquement compatible avec le produit pour produire avec celui-ci un phénomène d'adhésion naturelle, à la manière d'une greffe, et d'autre part d'une étiquette réalisée en un matériau stable dimentionnellement, rapportée par tous moyens sur la base, sans liaison directe avec le produit et comportant des informations de toutes formes reportées par quelques moyens que ce soit, directement ou indirectement.

Cette séparation des fonctions permet d'éviter tout transfert d'humidité ou même la propagation de champignons du fromage vers le support d'informations proprement dit.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue frontale qui représente un support d'informations selon l'invention plus particulièrement destiné à un fromage sur lequel elle est placée.
La figure 2 est une vue arrière d'un support d'informations selon la figure 1.
La figure 3 est une vue en coupe selon la ligne III, III de la figure 2.
La figure 4 est une vue d'un support d'informations selon une variante de réalisation de l'invention, apposée sur un fromage.
La figure 5 est une vue arrière d'un support d'informations selon la figure 4.

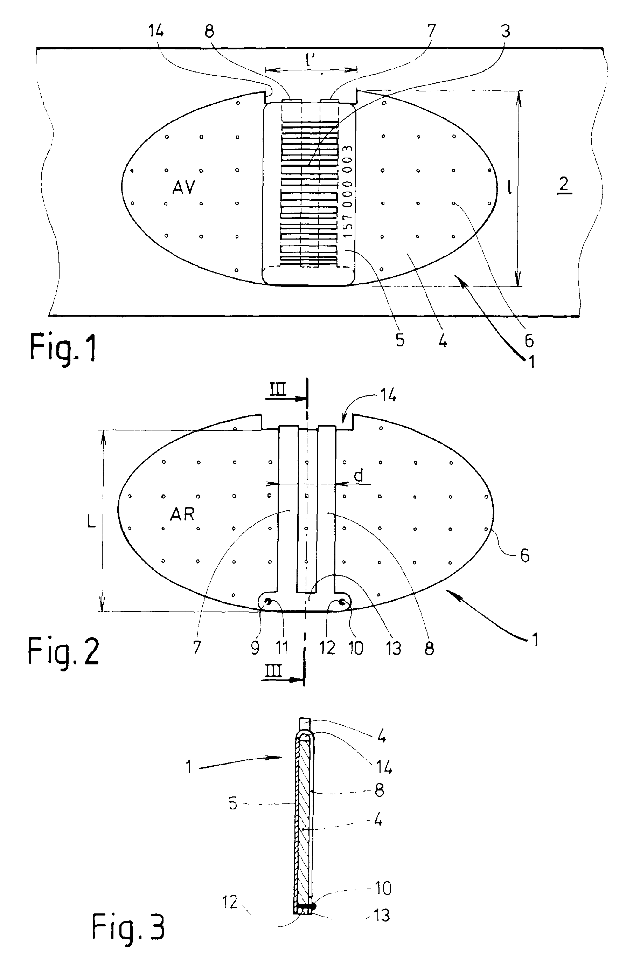

Le support d'informations 1 représenté sur les figures 1 à 3 représente un premier mode de réalisation de l'invention.

Le support d'informations 1 représenté à la figure 1 est apposé sur un fromage 2, de manière à permettre son identification et sa tracabilité dans le temps à partir de sa fabrication et jusqu'à sa consommation.

Le support d'informations 1 comporte selon le présent exemple des informations présentées sous forme de codes barres 3, mais bien entendu ces informations pourraient revêtir toute autre forme.

Le support d'informations 1 est constitué d'une part d'une base 4 organiquement compatible avec le fromage 2 pour produire avec celui-ci un phénomène d'adhésion naturelle, à la manière d'une greffe, et d'autre part une étiquette 5 réalisée en un matériau stable dimensionnellement, rapporté par tous moyens sur la base 4 sans liaison directe avec le fromage 2 et comportant les informations 3 qui sont reportées directement ou indirectement sur l'étiquette 5 par quelques moyens que ce soit.

Préférentiellement, le produit 2 étant un fromage, la base 4 dudit support 1 est réalisée en caséine, soit une présure alimentaire dérivée du lait, se présentant sous la forme d'une feuille perforée de trous 6 découpée aux dimensions requises et compatibles avec celles de l'étiquettes.

Selon l'exemple de réalisation des figures 1 à 3, l'étiquette 5 est rapportée sur la face avant AV de la base 4 en caséine, par l'intermédiaire d'au moins une bretelle de maintien 7, 8 issue de l'une des extrémités de ladite étiquette et rejoignant son extrémité opposée, en contournant la base 4 en caséine par sa face arrière AR.

En l'occurrence, l'étiquette 5 est de forme rectangulaire dont la longueur « L » est sensiblement égale à la largeur « l » de la base 4, étiquette 5 comportant deux bretelles parallèles de maintien 7, 8, issues de l'une de ses extrémités et rendues solidaires de son autre extrémité par l'intermédiaire de deux picots 9, 10 issus de celle-ci, traversant la base 4, puis des trous 11, 12 d'une zone transversale de liaison 13 des bretelles 7, 8, avant d'être rendus solidaires de ladite zone 13 par déformation thermique de leurs extrémités dépassantes.

Selon une variante de réalisation, les bretelles de maintien 7 et 8 sont rendues solidaires d'une zone de liaison 13 de celles-ci par des moyens d'encliquetage élastiques réalisés complémentairement sur les parties 7, 8 et 13.

Selon une autre caractéristique de l'invention se rapportant au mode de réalisation ci-dessus, le positionnement et le maintien en place de l'étiquette 5 sur la base 4, à sa partie opposée aux picots de liaison 9, 10, s'effectuent par l'intermédiaire d'une encoche 14 globalement quadrangulaire réalisée à la partie supérieure de la base 4 et dont la largeur « l » est au moins égale à la distance « d » séparant les côtés longitudinaux extérieurs des bretelles parallèles de maintien 7, 8.

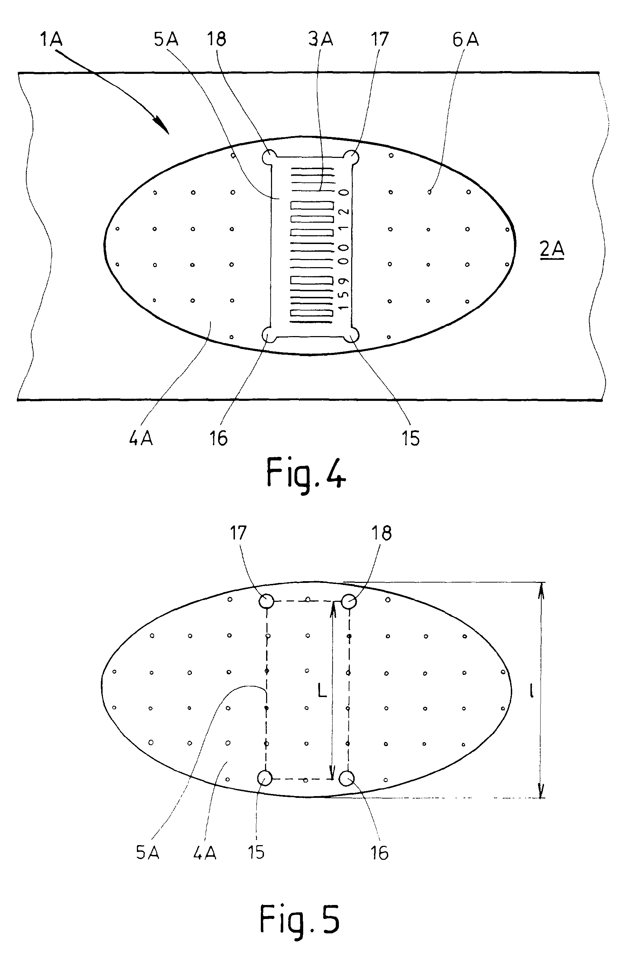

Selon un second mode de réalisation de l'invention représenté sur les figures 4 et 5, l'étiquette 5A est de forme rectangulaire, dont la longueur « L » est sensiblement égale à la largeur « l » de la base 4A, son maintien sur celle-ci s'effectuant par l'intermédiaire que quatre picots 15, 16, 17, 18 issus des quatre angles de l'étiquette 5A et traversant des trous correspondants de la base 4A avant d'en être rendus solidaires par déformation thermique de leurs extrémités dépassantes.

D'une manière générale commune aux deux modes de réalisations décrits ci-dessus l'étiquette 5, 5A est réalisée en matière plastique garantie alimentaire.

A titre d'exemple, les inscriptions 3, 3A sont constituées de chiffres, lettres, logo, code barre, code bidimentionnel etc... et sont transcrites sur l'étiquette 5, 5A par gravure.

Selon une autre variante, les inscriptions sont constituées de chiffres, lettres, logos, codes barre, code bidimentionnel etc... et sont transcrites sur l'étiquette par impression 5, 5A laser.

## Revendications

1. Support d'informations destiné à être apposé sur un produit agro-alimentaire, notamment un fromage, de manière à permettre son identification et sa tracabilité dans le temps, à partir de sa fabrication et jusqu'à sa consommation, constitué d'une part d'une base (4, 4A) organiquement compatible avec le produit (2, 2A) pour produire avec celui-ci un phénomène d'adhésion naturelle, et d'autre part d'une étiquette (5, 5A) réalisée en un matériau stable dimensionnellement, **caractérisé en ce que** l'étiquette (5) est rapportée sur la face avant (AV) d'une base (4) organiquement compatible avec le produit, par l'intermédiaire d'au moins une bretelle de maintien (7, 8) issue de l'une des extrémités de ladite étiquette et rejoignant son extrémité opposée, en contournant la base (4) par sa face arrière (AR).

2. Support d'informations selon la revendication 1, **caractérisé en ce que** la base (4, 4A) organiquement compatible avec le produit (2, 2A) est de la caséine.

3. Support d'informations selon l'une des revendications 1 ou 2, **caractérisé en ce que** l'étiquette (5) est de forme rectangulaire dont la longueur « L » est sensiblement égale à la largeur « l » de la base (4), étiquette (5) comportant deux bretelles parallèles de maintien (7, 8) issues de l'une de ses extrémités et rendues solidaires de son autre extrémité.

4. Support d'informations selon la revendication 3, **caractérisé en ce que** les deux bretelles parallèles de maintien (7, 8) issues de l'une des extrémités de l'étiquette (5) sont rendues solidaires de son autre extrémité par l'intermédiaire de deux picots (9, 10) issus de celle-ci, traversant la base (4), puis des trous (11, 12) d'une zone transversale de liaison (13) des bretelles (7, 8) avant d'être rendus solidaires de ladite zone (13) par déformation thermique de leurs extrémités dépassantes.

5. Support d'informations selon l'une des revendications 1 à 3, **caractérisé en ce que** les bretelles de maintien (7, 8) sont rendues solidaires d'une zone de liaison (13) de celles-ci par des moyens d'encliquetage élastiques réalisés complémentairement sur les parties (7, 8 et 13).

6. Support d'informations selon l'une des revendications 4 ou 5, **caractérisé en ce que** le positionnement et le maintien en place de l'étiquette (5) sur la base (4), à sa partie opposée aux picots de liaison (9, 10), s'effectuent par l'intermédiaire d'une encoche (14) globalement quadrangulaire réalisée à la partie supérieure de la base (4) et dont la largeur « l » est au moins égale à la distance « d » séparant les côtés longitudinaux extérieurs des bretelles parallèles de maintien (7, 8).

7. Support d'informations selon la revendication 1, **caractérisé en ce que** l'étiquette (5A) est de forme rectangulaire, dont la longueur « L » est sensiblement égale à la largeur « l » de la base (4A), son maintien sur celle-ci s'effectuant par l'intermédiaire de quatre picots (15, 16, 17, 18) issus des quatre angles de l'étiquette (5A) et traversant des trous correspondants de la base (4A) avant d'en être rendus solidaires par déformation thermique de leurs extrémités dépassantes.
